# FASCICULE DE BREVET EUROPEEN

(11) **EP 2 181 893 B1**
(45) Date de publication et mention de la délivrance du brevet: **26.10.2011**
(21) Numéro de dépôt: 08305752.1
(22) Date de dépôt: 30.10.2008
(51) Int. Cl.: B60R 5/04, B62D 25/20

(54) **Dispositif d'aménagement latéral de compartiment à bagages de véhicule automobile, véhicule équipé de tels dispositifs**
Vorrichtung zur seitlichen Raumordnung des Kofferraums eines Kraftfahrzeugs und mit solchen Vorrichtungen ausgestattetes Fahrzeug
Device for lateral arrangement of the luggage compartment of an automobile, vehicle equipped with such devices

(43) Date de publication de la demande: 05.05.2010
(73) Titulaire: PEUGEOT CITROËN AUTOMOBILES S.A., 78140 Vélizy Villacoublay (FR)
(72) Inventeur: Sevetier, Abdré, 75016, Paris (FR)
(74) Mandataire: Allain, Laurent

(56) Documents cités:
- EP-A- 2 008 871
- DE-A1-102007 001 849
- JP-A- 2007 091 105

## Description

La présente invention est relative à des dispositifs d'aménagement latéral de compartiment à bagages de véhicule automobile.

L'invention a également trait aux véhicules équipés de tels dispositifs.

Le document EP1378397, décrit un tel dispositif qui comporte une glissière latérale de guidage pour recevoir un organe de guidage aménagé sur un plateau de partition verticale du compartiment de façon à permettre le déplacement entre une position haute et une position basse dans le compartiment, dans lequel la glissière comporte :
- une portion haute d'arrêt de l'organe de guidage,
- une portion basse d'arrêt de l'organe de guidage,
- une portion intermédiaire de changement de position de l'organe de guidage, reliant les portions haute et basse d'arrêt.

Un inconvénient de ce dispositif connu est qu'il ne permet pas de démonter le plateau, par exemple pour dégager de l'espace dans le compartiment à bagages.

Un dispositif comportant les caractéristiques du preambule de la revendication 1 est connu du document JP-A-2007-91105.

La présente invention a pour but d'améliorer de tels dispositifs, notamment en remédiant à l'inconvénient ci-dessus sans pour autant rendre plus complexe le maniement du plateau entre ses positions haute et basse d'utilisation.

A cet effet, le dispositif selon l'invention du type ci-dessus est **caractérisé en ce que** la glissière de guidage comporte en outre, à sa partie supérieure, d'une part au moins un tronçon débouchant extérieurement et pouvant communiquer avec la portion haute ou la portion basse d'arrêt de l'organe de guidage et d'autre part une paroi d'aiguillage permettant sélectivement, au travers du tronçon débouchant :
- d'extraire l'organe de guidage soit de la portion basse d'arrêt soit de la portion haute d'arrêt, ou
- d'introduire l'organe de guidage soit vers la portion basse d'arrêt soit vers la portion haute d'arrêt.

Dans divers modes de réalisation du dispositif selon l'invention, on peut éventuellement avoir recours en outre à l'une et/ou à l'autre des dispositions suivante :
- la paroi d'aiguillage est montée mobile dans la glissière et le tronçon débouchant comprend un tronçon sensiblement horizontal communiquant avec la portion haute d'arrêt ou avec la portion intermédiaire selon la position de la paroi d'aiguillage et un tronçon sensiblement vertical prolongeant le tronçon horizontal et débouchant extérieurement ;
- la paroi d'aiguillage est disposée au raccordement du tronçon horizontal et de la portion intermédiaire et occupe une position de repos d'obturation de la portion intermédiaire et d'ouverture du tronçon horizontal ou, sous l'action de l'organe de guidage, une position soulevée d'obturation du tronçon horizontal et d'ouverture de la portion intermédiaire ;
- la paroi d'aiguillage est un volet déformable élastiquement ou la paroi d'aiguillage est un volet soumis à l'action d'un ressort de rappel ;

Par ailleurs, l'invention a également pour objet un véhicule comportant un compartiment à bagages recevant un plateau de partition verticale du compartiment, monté mobile entre une position haute dans laquelle il sépare un volume inférieur et un volume supérieur du compartiment à bagages et une position basse au fond du compartiment à bagages, **caractérisé en ce qu'**il comporte un dispositif selon l'invention dans chacun de deux habillages latéraux du compartiment à bagages et en ce que le plateau comporte deux organes de guidage mobiles à coulissement guidé dans deux glissières entre la position basse, la position haute et une position d'extraction du plateau.

Dans le véhicule selon l'invention, le plateau peut être mobile à pivotement vers le haut autour de ses organes de guidage à partir de sa position basse et de sa position haute quand les organes de guidage sont positionnés dans les portions hautes et basses de la glissière.

Dans le véhicule selon l'invention, les organes de guidage peuvent être des pions solidaires latéralement d'une extrémité avant de côtés longitudinaux du plateau.

D'autres buts, caractéristiques et avantages de l'invention apparaîtront au cours de la description suivante de modes de réalisation donnés à titre d'exemple non limitatifs, en regard des dessins joints.

Sur les dessins :
- la figure 1 est une vue de côté représentant schématiquement une glissière d'un dispositif selon l'invention et, dans trois positions, un plateau mobile dont l'avant est guidé par la glissière ;
- la figure 2 est une vue agrandie de la partie cerclée en II de la figure 1 ;
- la figure 3 est une vue de côté représentant schématiquement une variante de glissière du dispositif selon l'invention.

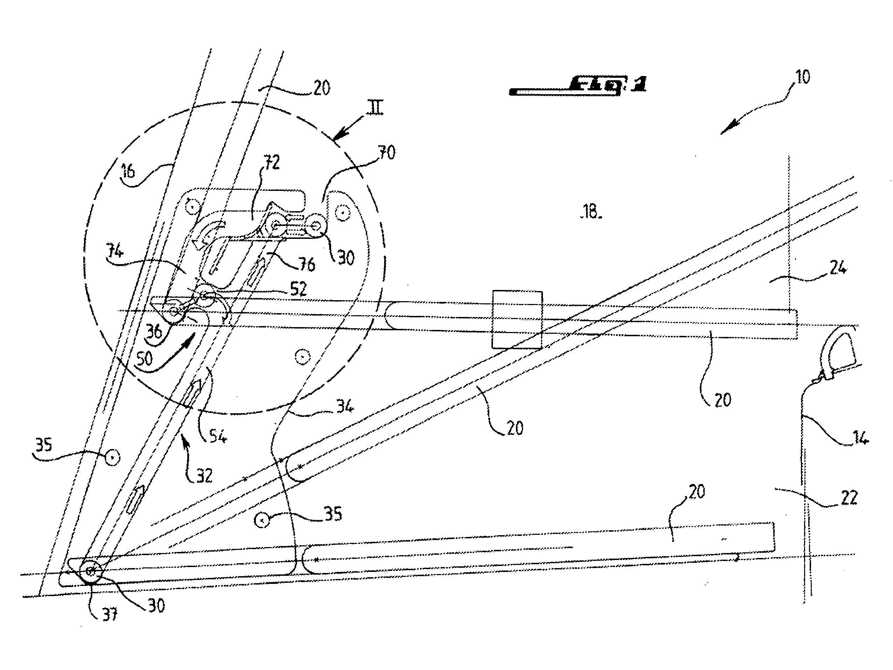

A la figure 1, un compartiment à bagages 10 à l'arrière d'un véhicule automobile, tel qu'un coffre arrière, est schématisé en étant délimité essentiellement par un plancher 12, une traverse arrière 14, une cloison avant 16 formée par un dossier de banquette et deux panneaux latéraux 18 d'habillage.

Un plateau 20 est prévu dans le compartiment à bagages 10 pour la partition verticale de ce dernier.

Quand le plateau 20 est horizontal dans une position haute à distance du plancher 12, au niveau d'un bord supérieur de la traverse 14, il forme un faux plancher séparant un volume inférieur 22 et un volume supérieur 24 de chargement dans le compartiment 10.

Quand le plateau 20 est horizontal dans une position basse contre le plancher 12, il forme la surface inférieure de chargement du compartiment à bagages 10.

Le plateau 20 comporte des organes de guidage sous forme de pions 30 latéralement solidaires d'une extrémité avant de chacun des côtés longitudinaux du plateau.

Le dispositif selon l'invention comporte deux glissières de guidage 32 des deux pions 30 du plateau 20 formées chacune de plusieurs portions ou tronçons de rainure réalisés dans une plaque d'habillage 34 fixée par exemple par des vis 35 au panneau d'habillage 18 correspondant. Chaque glissière 32 s'étend dans un plan vertical et a une largeur qui correspond sensiblement au diamètre du pion 30 correspondant.

Chaque glissière comporte une portion haute d'arrêt 36 qui est formée par un logement sensiblement en demi cylindre dont le diamètre correspond sensiblement à celui du pion 30, et apte à recevoir le pion 30 quand le plateau 20 est dans sa position haute.

Chaque glissière comporte en outre une portion basse d'arrêt 37, pour loger un pion 30 quand le plateau 20 est dans sa position basse.

Entre les portions d'arrêt haute 36 et basse 37, la glissière 32 comporte une portion intermédiaire 50 de changement de position.

La portion intermédiaire 50 comporte un premier tronçon supérieur 52 de déblocage raccordant vers l'arrière la portion haute d'arrêt 36 avec un deuxième tronçon rectiligne 54 incliné de haut en bas en avant du véhicule et débouchant à son extrémité inférieure dans la portion basse d'arrêt 37.

La glissière comporte, en partie supérieure de la plaque 34, un tronçon supérieur vertical 70 débouchant à sa partie supérieure et un tronçon inférieur horizontal 72 prolongeant le tronçon vertical 70.

Le tronçon horizontal 72 est raccordé vers l'avant à un tronçon d'entrée 74 qui est recourbé en avant vers le bas et qui débouche à son extrémité inférieure dans la portion haute d'arrêt 36.

Le tronçon horizontal 72 peut communiquer avec un tronçon de sortie 76 en prolongement du tronçon rectiligne 54 lorsque l'on souhaite retirer le plateau 20 des glissières 32. Le bord supérieur du tronçon horizontal 72 comporte, dans l'axe du tronçon de sortie 76, une entaille 77 dont le rôle sera expliqué ultérieurement.

Le tronçon sensiblement horizontal 72, le tronçon d'entrée 74 et le tronçon de sortie 76 de chaque glissière 32 permettent l'aiguillage du pion correspondant en étant formés, dans le mode de réalisation représenté, autour d'un îlot central d'aiguillage 78 portant une paroi mobile d'aiguillage 80 formée dans le cas présent par une lame élastique.

La lame 80 est montée mobile à pivotement au raccordement du tronçon horizontal 72 avec le tronçon de sortie 76, alternativement entre une position non déformée dite d'entrée du pion 30 et une position déformée dite de sortie de ce pion.

Dans sa position d'entrée, la lame 80 est horizontale et obture une ouverture supérieure du tronçon de sortie 76 pour permettre au pion 30 d'être logé dans la portion haute d'arrêt 36 en coulissant dans le tronçon d'entrée 74 via le tronçon horizontal 72 lorsque l'on souhaite placer le plateau 20 à sa position haute.

A l'inverse, dans sa position de sortie, sous l'action du pion 30, la lame 80 est recourbée vers le haut avec son extrémité supérieure logée dans l'entaille 77 de façon à fermer le tronçon d'entrée 72 et assurer le guidage du pion 30 hors du tronçon de sortie 76 vers le tronçon vertical 70.

Le montage du plateau, son maniement en faisant circuler ses pions 30 dans la glissière 32 et son démontage sont maintenant expliqués.

Pour le montage du plateau, il suffit à un utilisateur d'insérer tout d'abord les pions 30 dans le tronçon vertical 70, par exemple en plaçant les pions 30 en appui sur le bord horizontal supérieur de la plaque 34, puis en tirant le plateau vers l'arrière jusqu'à ce que les pions 30 tombent dans le tronçon vertical 70. Cette manipulation est particulièrement aisée et permet une insertion sûre des pions 30 dans la glissière 32, sans risque de démontage intempestif.

Ensuite, pour que le plateau soit sécurisé en position haute, il suffit à l'utilisateur de pousser le plateau vers l'avant de façon à faire circuler les pions 30 selon les flèches F1 et F2 respectivement dans les tronçons horizontaux 72 et d'entrée 74 des glissières 32, jusqu'à ce que les pions tombent dans les tronçons 74 et soient automatiquement arrêtés dans les logements 36 formant les portions hautes d'arrêt. Dans ce cas, le plateau 20 peut être immobilisé à l'horizontale dans sa position haute. L'arrière du plateau est par exemple en appui latéral sur des saillies (non représentées) portées par les panneaux latéraux 18.

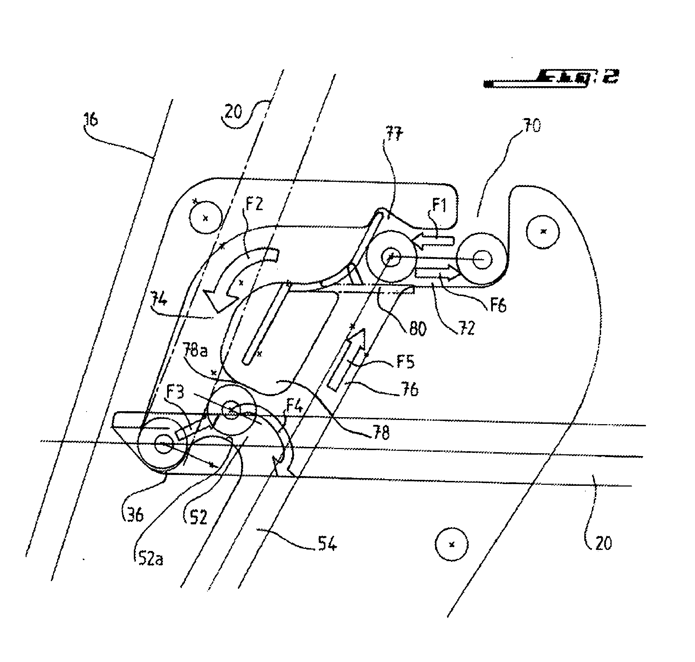

Pour changer le niveau du plateau 20 de sa position haute à sa position basse, il suffit à l'utilisateur d'incliner le plateau en le faisant pivoter vers le haut autour de ses pions 30, et de le tirer vers l'arrière afin de faire coulisser les pions dans les portions intermédiaires 50 sans effort supplémentaire, respectivement selon les flèches F3 et F4 à la figure 2, jusqu'à ce qu'ils soient arrêtés dans les portions basses d'arrêt 37.

L'inclinaison en arrière vers le bas de la paroi inférieure 78a de chacun des îlots 78, la courbure vers le haut de la paroi inférieure 52a de chacun des premiers tronçons de déblocage 52 et l'inclinaison des deuxièmes tronçons 54 permettent un maniement aisé du plateau de sa position haute à sa position basse, en utilisant une seule main manipulant par exemple une poignée (non représentée) située à l'extrémité arrière du plateau.

En sens inverse, la montée du plateau 20 depuis sa position basse est facile à effectuer par simple traction continue vers l'arrière sur la poignée quand le plateau est incliné vers le haut. Dans ce cas, les pions 30 circulent dans les deuxièmes tronçons 54 puis dans les tronçons de sortie 76 (flèche F5), jusqu'à ce que les pions 30 entrent en contact avec les lames 80, poussent les lames 80 en position de sortie en les déformant vers le haut, jusqu'à ce qu'elles viennent en butée au fond de l'entaille 77. De cette manière, les pions 30 continuent leur course dans les tronçons horizontaux 72 (flèche F6), et viennent en butée à l'arrière desdits tronçons 72. Les lames 80 reprennent alors leur position initiale d'obturation de la rampe 76.

Le plateau 20 peut alors, en évitant facilement toute erreur de manipulation, soit :
- être repoussé vers l'avant pour être replacé en position basse, les pions 30 se déplaçant selon les flèches F1 et F2 comme vu précédemment, les lames 80 étant, après passage des pions 30, revenues automatiquement dans leur position horizontale d'entrée, ou
- être tiré vers le haut pour démontage par extraction des pions 30 hors des glissières 32 via les tronçons verticaux 70.

Il est à remarquer que quand les pions 30 sont dans la portion haute d'arrêt 36, par pivotement autour de ces derniers, le plateau 20 peut être mis dans une position relevée dans laquelle il est sensiblement parallèle à la cloison avant 16, comme représenté en traits mixtes à la figure 2.

Le dispositif selon l'invention a donc pour avantage une manipulation aisée du plateau 20, avec une seule main, tant pour son montage, son démontage que pour son changement de niveau entre ses positions haute et basse, la paroi d'aiguillage des pions 30 formée par la lame 80 permettant d'éviter des erreurs de manipulation.

Dans une variante de réalisation non représentée, la paroi d'aiguillage est un volet rigide qui est monté à pivotement autour d'un axe avant sur l'îlot, au raccordement des tronçons horizontaux 72 et de sortie 76, et qui est maintenu en position d'entrée en étant soumis à l'action d'un ressort de rappel vers le bas pour obturer le haut du tronçon de sortie 76 tout en étant mobile à rotation vers le haut par poussée verticale d'un pion.

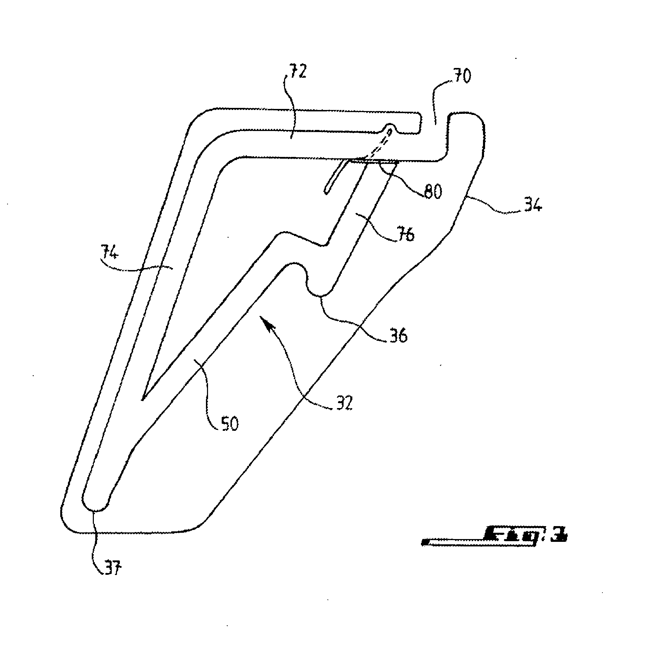

Dans une variante de réalisation représentée à la figure 3, les portions haute 36 et basse 37 d'arrêt des glissières 32 sont inversées par rapport au mode de réalisation des figures 1 et 2. Le tronçon d'entrée 74 raccorde le tronçon horizontal 72 avec la portion basse d'arrêt 37. Le tronçon de sortie 76 raccorde la portion haute d'arrêt 36 avec le tronçon horizontal 72.

Dans cette variante de réalisation, l'insertion des pions dans les glissières ou l'extraction des pions hors des glissières 32 s'effectuent par passage dans les tronçons verticaux 70 et horizontaux 72, comme dans le mode de réalisation représenté aux figures 1 et 2. Par contre, ici, les pions descendent des tronçons horizontaux 72 jusqu'à être arrêtés dans les portions basses 37. Le changement de position d'utilisation du plateau de sa position basse vers sa position haute s'effectue par simple traction vers l'arrière sur le plateau quand il est incliné vers le haut, les pions circulant dans les portions intermédiaires 50.

Dans cette variante de réalisation, le changement de niveau des pions des portions hautes 36 vers les portions basses 37, tout comme l'extraction des pions hors des glissières 32, s'effectuent le plus simplement d'abord en passant à travers les tronçons de sortie 76 en soulevant les lames 80 puis en passant dans les tronçons 72, par simple traction du plateau vers l'arrière quand il est incliné vers le haut.

Dans une variante de réalisation non représentée, les glissières sont réalisées par des rainures creusées directement dans les panneaux d'habillage latéral du compartiment à bagages au lieu d'être des rainures formées dans la plaque d'habillage rapportée sur chacun des panneaux.

Il est évident que le passage du plateau 20 d'une position inférieure à une position supérieure, est une opération qui peut se répéter sur plusieurs niveaux, en reconduisant autant de fois qu'il est nécessaire, le dispositif d'aménagement latéral selon l'invention.

## Revendications

1. Dispositif d'aménagement latéral de compartiment à bagages (10) de véhicule automobile comportant une glissière latérale de guidage (32) pour recevoir un organe de guidage (30) aménagé sur un plateau (20) de partition verticale du compartiment (10) de façon à permettre le déplacement du plateau entre une position haute et une position basse dans le compartiment, dans lequel la glissière (32) comporte :
- une portion haute (36) d'arrêt de l'organe de guidage (30),
- une portion basse d'arrêt (37) de l'organe de guidage (30),
- une portion intermédiaire (50) de changement de position de l'organe de guidage (30), reliant les portions haute (36) et basse (37) d'arrêt,
la glissière de guidage (32) comportant en outre, à sa partie supérieure, d'une part au moins un tronçon débouchant extérieurement (70, 72) et ledit tronçon pouvant communiquer avec la portion haute (36) ou la portion basse d'arrêt (37) de l'organe de guidage, **caractérisé en ce que** la glissière de guidage comporte d'autre part une paroi d'aiguillage (78, 80) permettant sélectivement, au travers du tronçon débouchant (70, 72) :
- d'extraire l'organe de guidage (30) soit de la portion basse d'arrêt (37) soit de la portion haute d'arrêt (36), ou
- d'introduire l'organe de guidage (30) soit vers la portion basse d'arrêt (37) soit vers la portion haute d'arrêt (36).

2. Dispositif selon la revendication précédente, dans lequel la paroi d'aiguillage (80) est montée mobile dans la glissière (32) et le tronçon débouchant comprend un tronçon sensiblement horizontal (72) communiquant avec la portion haute d'arrêt (36) ou avec la portion intermédiaire (50) selon la position de la paroi d'aiguillage (80) et un tronçon sensiblement vertical (70) prolongeant le tronçon horizontal (72) et débouchant extérieurement.

3. Dispositif selon la revendication 2, dans lequel la paroi d'aiguillage (80) est disposée au raccordement du tronçon horizontal (72) et de la portion intermédiaire (50) et occupe une position de repos d'obturation de la portion intermédiaire (50) et d'ouverture du tronçon horizontal (72) ou, sous l'action de l'organe de guidage (30), une position soulevée d'obturation du tronçon horizontal (72) et d'ouverture de la portion intermédiaire (50).

4. Dispositif selon l'une quelconque des revendications 2 à 3, dans lequel la paroi d'aiguillage (80) est un volet déformable élastiquement.

5. Dispositif selon l'une quelconque des revendications 2 à 3, dans lequel la paroi d'aiguillage (80) est un volet soumis à l'action d'un ressort de rappel.

6. Véhicule comportant un compartiment à bagages (10) recevant un plateau (20) de partition verticale du compartiment (10), monté mobile entre une position haute dans laquelle il sépare un volume inférieur (22) et un volume supérieur (24) du compartiment à bagages et une position basse au fond du compartiment à bagages, **caractérisé en ce qu'**il comporte un dispositif selon l'une quelconque des revendications précédentes dans chacun de deux habillages (18, 34) latéraux du compartiment à bagages (10) et **en ce que** le plateau (20) comporte deux organes de guidage (30) mobiles à coulissement guidé dans deux glissières (32) entre la position basse, la position haute et une position d'extraction du plateau (20).

7. Véhicule selon la revendication précédente, dans lequel le plateau (20) est mobile à pivotement vers le haut autour de ses organes de guidage (30) à partir de sa position basse et de sa position haute quand les organes de guidage (30) sont positionnés dans les portions hautes (36) et basses (37) de la glissière (32).

8. Véhicule selon l'une quelconque des revendication 6 à 7, dans lequel les organes de guidage (30) sont des pions solidaires latéralement d'une extrémité avant de côtés longitudinaux du plateau (20).

## Claims

1. Device for lateral arrangement of the luggage compartment (10) of a motor vehicle, comprising a lateral guiding slide (32) to receive a guiding member (30) arranged on a vertical partition plate (20) of the compartment (10) so as to permit the displacement of the plate between an upper position and a lower position in the compartment, in which the slide (32) comprises:
- an upper stop portion (36) of the guiding member (30),
- a lower stop portion (37) of the guiding member (30),
- an intermediate portion (50) for changing the position of the guiding member (30), connecting the upper (36) and lower (37) stop portions,
the guiding slide (32) further comprising, at its upper part, on the one hand at least one section emerging externally (70, 72), the said section being able to communicate with the upper stop portion (36) or the lower stop portion (37) of the guiding member, **characterized in that** the guiding slide comprises in addition a switching wall (78, 80) permitting selectively, through the emerging section (70, 72):
- extraction of the guiding member (30) either from the lower stop portion (37) or from the upper stop portion (36), or
- introduction of the guiding member (30) either towards the lower stop portion (37) or towards the upper stop portion (36).

2. Device according to the preceding claim, in which the switching wall (80) is mounted so as to be movable in the slide (32) and the emerging section comprises a substantially horizontal section (72) communicating with the upper stop portion (36) or with the intermediate portion (50) according to the position of the switching wall (80) and a substantially vertical section (70) extending the horizontal section (72) and emerging externally.

3. Device according to Claim 2, in which the switching wall (80) is disposed at the connection of the horizontal section (72) and of the intermediate portion (50) and occupies a position of rest for closing off the intermediate portion (50) and opening the horizontal section (72) or, under the action of the guiding member (30), a raised position for closing off the horizontal section (72) and opening the intermediate portion (50).

4. Device according to any one of Claims 2 to 3, in which the switching wall (80) is an elastically deformable flap.

5. Device according to any one of Claims 2 to 3, in which the switching wall (80) is a flap subject to the action of a return spring.

6. Vehicle comprising a luggage compartment (10) receiving a vertical partition plate (20) of the compartment (10), mounted so as to be movable between an upper position, in which it separates a lower volume (22) and an upper volume (24) of the luggage compartment and a lower position at the bottom of the luggage compartment, **characterized in that** it comprises a device according to any one of the preceding claims in each of two lateral trims (18, 34) of the luggage compartment (10) and **in that** the plate (20) comprises two slidably movable guiding members (30) guided in two slides (32) between the lower position, the upper position and a position for extraction of the plate (20).

7. Vehicle according to the preceding claim, in which the plate (20) is pivotably movable towards the top about its guiding members (30) from its lower position and from its upper position when the guiding members (30) are positioned in the upper portions (36) and lower portions (37) of the slide (32).

8. Vehicle according to any one of Claims 6 to 7, in which the guiding members (30) are pins integral laterally by a front end with longitudinal sides of the plate (20).

## Patentansprüche

1. Vorrichtung zum seitlichen Einrichten eines Gepäckraums (10) eines Kraftfahrzeugs, die eine seitliche Gleitführung (32) aufweist, um ein Führungsorgan (30) aufzunehmen, das auf einer vertikalen Teilungsplatte (20) des Raums (10) derart eingerichtet ist, dass das Verlagern der Platte zwischen einer oberen und einer unteren Position in dem Raum erlaubt wird, bei der die Gleitführung (32) Folgendes aufweist:
- einen oberen Abschnitt (36) zum Stoppen des Führungsorgans (30),
- einen unteren Abschnitt (37) zum Stoppen des Führungsorgans (30),
- einen Zwischenabschnitt (50) zum Positionswechseln des Führungsorgans (30), der den oberen Stoppabschnitt (36) und den unteren Stoppabschnitt (37) verbindet,
wobei die Gleitführung (32) ferner in ihrem oberen Teil einerseits mindestens einen Abschnitt, der nach außen mündet (70, 72), aufweist, wobei der Abschnitt mit dem oberen Stoppabschnitt (36) oder dem unteren Stoppabschnitt (37) des Führungsorgans kommunizieren kann, **dadurch gekennzeichnet, dass** die Gleitführung andererseits eine Weichenwand (78, 80) aufweist, die es selektiv über den mündenden Abschnitt (70, 72) erlaubt:
- das Führungsorgan (30) entweder aus dem unteren Stoppabschnitt (37) oder aus dem oberen Stoppabschnitt (36) zu extrahieren oder
- das Führungsorgan (30) entweder zu dem unteren Stoppabschnitt (37) oder zu dem oberen Stoppabschnitt (36) einzuführen.

2. Vorrichtung nach dem vorhergehenden Anspruch, bei der die Weichenwand (80) in der Gleitführung (32) beweglich montiert ist und bei der der mündende Abschnitt einen im Wesentlichen horizontalen Abschnitt (72) aufweist, der mit dem oberen Stoppabschnitt (36) oder mit dem Zwischenabschnitt (50) je nach der Position der Weichenwand (80) und einem im Wesentlichen vertikalen Abschnitt (70), der den horizontalen Abschnitt (72) verlängert und nach außen mündet, kommuniziert.

3. Vorrichtung nach Anspruch 2, bei der die Weichenwand (80) am Anschluss des horizontalen Abschnitts (72) mit dem Zwischenabschnitt (50) angeordnet ist und eine Verschluss-Ruheposition des Zwischenabschnitts (50) und Öffnungsposition des horizontalen Abschnitts (72) einnimmt oder, unter der Einwirkung des Führungsorgans (30), eine angehobene Verschlussposition des horizontalen Abschnitts (72) und Öffnungsposition des Zwischenabschnitts (50).

4. Vorrichtung nach einem der Ansprüche 2 bis 3, bei der die Weichenwand (80) eine elastisch verformbare Klappe ist.

5. Vorrichtung nach einem der Ansprüche 2 bis 3, bei der die Weichenwand (80) eine Klappe ist, die der Einwirkung einer Rückholfeder ausgesetzt ist.

6. Fahrzeug, das einen Gepäckraum (10) aufweist, der eine vertikale Teilungsplatte (20) des Fachs (10) aufweist, die zwischen einer oberen Position, in der sie ein unteres Volumen (22) und ein oberes Volumen (24) des Gepäckraums trennt, und einer unteren Position am Boden des Gepäckraums beweglich installiert ist, **dadurch gekennzeichnet, dass** es eine Vorrichtung nach einem der vorhergehenden Ansprüche in jeder seiner seitlichen Verkleidungen (18, 34) des Gepäckraums (10) aufweist, und dass die Platte (20) zwei Führungsorgane (30) aufweist, die in zwei Gleitführungen (32) zwischen der unteren, der oberen und einer Extraktionsposition der Platte (20) gleitend beweglich sind.

7. Fahrzeug nach dem vorhergehenden Anspruch, bei dem die Platte (20) nach oben um ihre Führungsorgane (30) ausgehend von ihrer unteren Position und ihrer oberen Position schwenkend beweglich ist, wenn die Führungsorgane (30) in dem oberen Abschnitt (36) und dem unteren Abschnitt (37) der Gleitführung (32) positioniert sind.

8. Fahrzeug nach einem der Ansprüche 6 bis 7, bei dem die Führungsorgane (30) Elemente sind, die seitlich fest mit einem vorderen Ende der Längsseiten der Platte (20) verbunden sind.
